# FASCICULE DE BREVET EUROPEEN

(11) **EP 3 513 088 B1**
(45) Date de publication et mention de la délivrance du brevet: **05.08.2020**
(21) Numéro de dépôt: 17780806.0
(22) Date de dépôt: 13.09.2017
(51) Int. Cl.: F16D 9/00, F16D 11/14, F02C 7/32

(54) **SYSTÈME DE DÉSOLIDARISATION EN ROTATION D'ARBRES**
SYSTEM ZUR DREHENTKOPPLUNG VON WELLEN
SYSTEM FOR THE ROTATIONAL DECOUPLING OF SHAFTS

(30) Priorité: 15.09.2016 FR 1658641
(43) Date de publication de la demande: 24.07.2019
(73) Titulaire: Safran Electrical & Power, 31702 Blagnac Cedex (FR)
(72) Inventeur: RODRIGUES, Fernand, 31702 Blagnac Cedex (FR); COURTOIS DE LOURMEL, Yves, 78120 Rambouillet (FR)
(74) Mandataire: Brevalex
(86) Numéro de dépôt international: PCT/FR2017/052440
(87) Numéro de publication internationale: WO 2018/051016

(56) Documents cités:
- EP-A2- 2 184 503
- DE-C- 822 178
- US-A- 4 167 695
- US-A- 4 244 455

## Description

### DOMAINE TECHNIQUE

L'invention concerne un système de désolidarisation en rotation d'arbres, en particulier d'arbres de transmission d'entraînement. L'invention concerne également un système de protection de générateur sur une connexion entre un générateur et un turboréacteur.

### ÉTAT DE LA TECHNIQUE ANTÉRIEURE

Les générateurs électriques dans des applications aérospatiales sont généralement entraînés par une boîte de vitesse de puissance qui, elle-même, est entraînée par un turboréacteur. Afin de permettre au générateur de produire une puissance électrique suffisante lorsque le turboréacteur fonctionne, le générateur est soumis à une grande vitesse.

De temps en temps, un défaut peut se produire au niveau du générateur. Le générateur fonctionnant à des vitesses élevées, il est souhaitable de prévoir une possibilité de déconnexion ou désolidarisation des arbres participant à l'entraînement du générateur lorsqu'un tel défaut, ou le développement d'un défaut, est détecté au niveau du générateur par son système de surveillance pour prévenir ou réduire d'autres dommages au générateur ou des composants associés.

Par exemple, si une défaillance dans la fourniture d'huile de lubrification du générateur ou une défaillance mécanique est détectée, ou même un problème lié à une température ou une pression excessives, ou un niveau d'huile en dessous d'un certain seuil, un système de désolidarisation d'arbres peut être déclenché pour interrompre l'entraînement du générateur afin de le protéger. Etant donnée la grande vitesse à laquelle le générateur est souvent entraîné, il est pratiquement tout le temps nécessaire de prévoir une déconnexion immédiate du générateur du turboréacteur, car le défaut peut s'amplifier rapidement et détruire possiblement le générateur.

A ce jour, il existe des systèmes de désolidarisation d'arbres de transmission faisant partie du système de protection de générateur sur des connexions entre un générateur et un turboréacteur. Lorsqu'un incident ou un défaut est détecté au niveau du générateur par le système de surveillance, le système de désolidarisation des arbres est déclenché.

Un exemple d'un tel système de désolidarisation comprend un actionneur lié à un des arbres qui peut intervenir pour tirer l'un des arbres, ou écarter les deux arbres, pour interrompre l'entraînement. Ce système de désolidarisation, bien que permettant une désolidarisation rapide, n'est pas idéal car il a besoin d'une énergie importante externe pour fournir la force requise pour surmonter le couple entre les deux arbres afin d'effectuer la désolidarisation. Non seulement une force importante est requise, mais de plus ce système de désolidarisation nécessite des composants capables de fournir une telle force qui sont souvent encombrants et pèsent lourds.

La demande de brevet EP2184503 A2 montre un autre exemple d'un système de désolidarisation d'arbres, qui fait partie d'un système de protection de générateur. Ce système est globalement préférable car il emploie l'énergie de rotation des arbres pour les séparer. Il comprend un piston extensible adjacent et parallèle à un arbre d'un générateur et entraîné par ce dernier. Le piston extensible comprend une partie déplaçable axialement avec une spirale montante sur son extérieur. Quand le système de désolidarisation est déclenché, une tige permet l'engagement de la spirale sur la partie déplaçable du piston extensible et le fait monter, grâce au fait que le piston extensible est en rotation, jusqu'à ce qu'il soit poussé contre une collerette sécurisée sur l'arbre du générateur. Cela a pour effet de désolidariser l'arbre du générateur de l'arbre du turboréacteur.

Ce système n'est pas non plus très adapté pour déconnecter le générateur du turboréacteur. La construction globale de ce système, en particulier le fait que la force pour séparer les arbres est transmise entièrement par le biais de la spirale et de la tige ne participe pas à une construction solide. En outre, à la vitesse élevée ou au couple maximal, cela peut impliquer un problème de non-fiabilité de la déconnexion, par exemple un glissement entre la tige et la spirale. Ainsi, il apparaît que la force est appliquée sur la collerette de manière asymétrique par rapport à l'arbre de générateur, ce qui peut avoir un effet néfaste.

### EXPOSÉ DE L'INVENTION

L'objet de la présente invention est par conséquent de remédier aux inconvénients précités en proposant un système de désolidarisation en rotation d'arbres comprenant :
- un premier arbre,
- un deuxième arbre,
le premier arbre s'étendant le long d'un premier axe et étant monté en rotation autour de cet axe, le premier arbre étant apte à coulisser axialement le long du premier axe depuis une position de raccordement en transmission de rotation avec le deuxième arbre vers une position de désolidarisation du deuxième arbre, et inversement,
caractérisé en ce que le système comprend en outre :
- une collerette située sur le premier arbre,
- une structure fixe située sensiblement autour du premier axe et faisant face à la collerette, la structure fixe comprenant des rampes ascendantes dans la direction axiale vers la collerette,
- un anneau de roulement situé autour du premier axe et axialement entre la collerette et la structure fixe, l'anneau de roulement étant mobile en rotation et comprenant des rouleaux, les rouleaux étant interposés entre les rampes et la collerette, l'anneau de roulement étant configuré pour être mis en rotation de sorte que les rouleaux se déplacent, entre la collerette et les rampes, selon la direction de rotation de la collerette sur les rampes et de sorte à écarter axialement la collerette et la structure fixe, de manière à ce que le premier arbre coulisse d'une position de raccordement avec le deuxième arbre à une position de désolidarisation.

De préférence, la collerette s'étend radialement depuis le premier arbre par rapport au premier axe, et les axes de roulement de rouleaux sont sensiblement perpendiculaires au premier axe.

De préférence, la structure fixe est un anneau fixe avec deux rampes circonférentielles situées sur ses côtés diamétralement opposés, et l'anneau de roulement comprend deux rouleaux situés sur ses côtés diamétralement opposés.

De préférence, le système comporte un moyen de sollicitation pour solliciter l'anneau de roulement en rotation.

Avantageusement, le moyen de sollicitation est un ressort ou un actionneur.

De préférence, le système comporte un organe d'emprisonnement pour maintenir la position de l'anneau de roulement lorsque ces rouleaux sont montés en haut des rampes.

Avantageusement, l'organe d'emprisonnement comprend une butée.

Avantageusement, l'organe d'emprisonnement comprend des petits galets ou une pièce inclinée.

Avantageusement, l'anneau de roulement est monté mobile en rotation dans un support de roulement, et l'organe d'emprisonnement comprend une goupille sollicitée par un ressort.

De préférence, le premier arbre est un arbre entraîné et le deuxième arbre est un arbre d'entraînement.

La présente invention propose également un système de protection de générateur sur une connexion entre un turboréacteur et un générateur comprenant :
- un système de surveillance,
- un système de désolidarisation en rotation d'arbres tel que celui défini précédemment,
dans lequel le premier arbre est un arbre d'un générateur et le deuxième arbre est un arbre lié à un turboréacteur.

### BRÈVE DESCRIPTION DES DESSINS

Il est décrit par la suite, à titre d'exemple non limitatif, un mode de réalisation de l'invention, en se référant aux dessins annexés, sur lesquels :
- les figures 1A à 1C illustrent, de manière simplifiée et en perspective, la cinématique d'un système de désolidarisation en rotation d'arbres selon un premier mode de réalisation de l'invention ;
- les figures 2A et 2B illustrent, en perspective, les arbres des figures 1A à 1C, représentant respectivement la position désolidarisée et la position raccordée en rotation;
- les figures 3A et 3B illustrent de manière schématique des moyens pour maintenir les arbres dans une position désolidarisée ; et
- la figure 4 illustre, en vue en coupe partielle, une variante du système de désolidarisation d'arbres.

Dans toutes ces figures, des références identiques peuvent désigner des éléments identiques ou similaires. En outre, les différentes parties représentées sur les figures ne le sont pas nécessairement selon une échelle uniforme, afin de rendre les figures plus lisibles.

### EXPOSÉ DÉTAILLÉ D'UN MODE DE RÉALISATION PARTICULIER

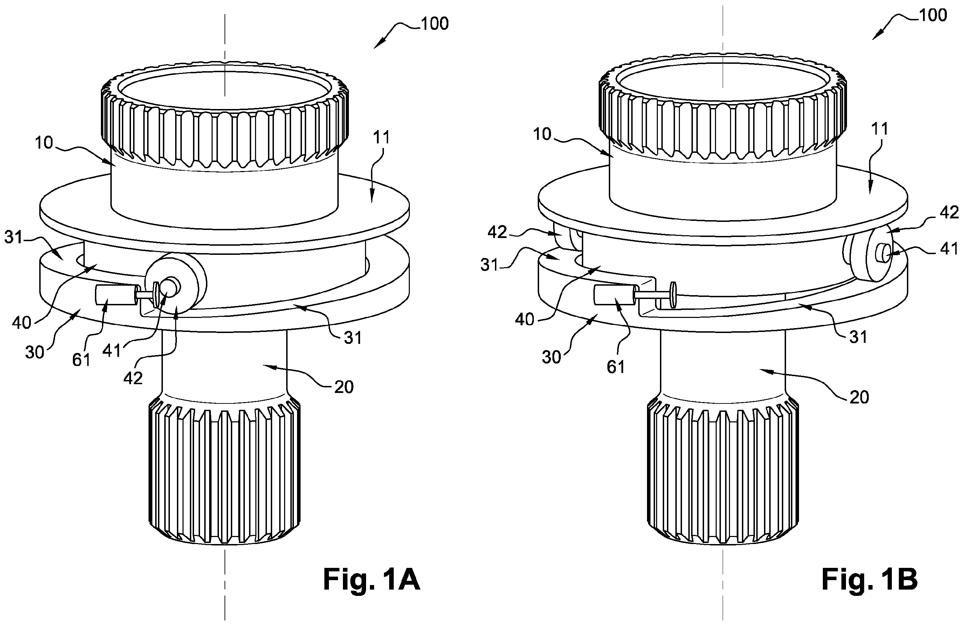

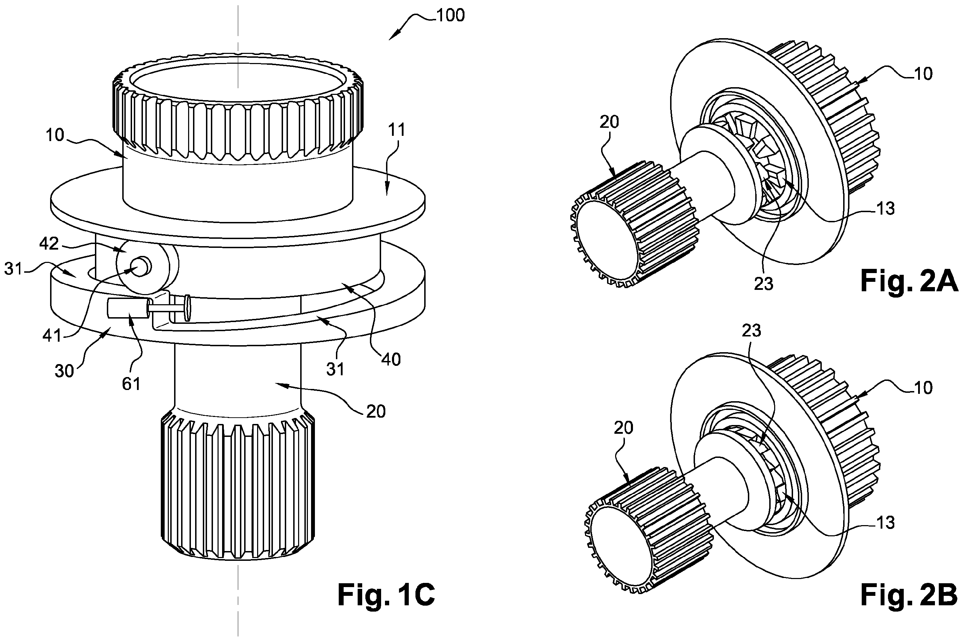

Les figures 1A à 1C illustrent la cinématique d'un système 100 de désolidarisation d'arbres qui fait partie d'un système de protection de générateur sur une connexion entre un générateur et un turboréacteur. Les figures 2A et 2B illustrent des arbres eux-mêmes dans des positions raccordée et désolidarisée, afin de rendre visibles les dents d'engrenage et la manière dont le raccordement par engrenages se fait.

Tout d'abord, les parties principales du système 100 de désolidarisation d'arbres vont être décrites en faisant référence à la figure 1A. La figure 1A illustre un arbre du générateur 10 (le premier arbre) s'étendant le long d'un premier axe et monté en rotation autour de cet axe. Cet arbre du générateur 10 est capable de coulisser axialement, le long du premier axe, pour se raccorder avec un arbre d'un turboréacteur 20 (le deuxième arbre) ou pour se déconnecter de ce dernier. Chaque arbre 10, 20 comprend des dents d'engrenage 13, 23, permettant un raccordement et une déconnexion dans la direction axiale, pour transmettre le mouvement de rotation. Un ressort (non illustré) pousse axialement l'arbre du générateur 10 vers l'arbre du turboréacteur 20 afin d'assurer le crabotage entre eux.

De façon habituelle, l'arbre du turboréacteur 20 est un arbre d'entraînement qui transmet son mouvement de rotation à l'arbre du générateur 10, lequel est donc entraîné pour produire de l'électricité, et pour alimenter des équipements et composants électriques et électroniques. Souvent, une boîte de vitesse est présente entre le turboréacteur et la partie de génération de l'électricité du générateur pour communiquer le mouvement de rotation et pour modifier le rapport de vitesse.

Cependant, pour des raisons de simplification, la connexion sera supposée comme étant entre un turboréacteur et un générateur, et il convient de comprendre que la connexion n'est pas forcément directement entre un turboréacteur et la partie de génération de l'électricité d'un générateur, mais est entre un arbre lié au turboréacteur et un générateur, par exemple, réalisée entre une boîte de vitesse liée au turboréacteur, donc un arbre lié au turboréacteur, ou entre le turboréacteur et une boîte de vitesse intégrée au générateur. Les deux arbres 10, 20 sont raccordés entre eux par engrenage et donc sont raccordés en état de transmission de rotation, pour la rotation autour du premier axe.

L'arbre du générateur 10 comprend une collerette 11 en un seul tenant, s'étendant radialement depuis l'arbre du générateur 10 et entraînée en rotation avec ce dernier. La collerette 11 est circulaire, et sensiblement plate, notamment sa surface qui fait face à l'arbre de turboréacteur 20.

Une structure fixe 30 est prévue sensiblement autour du premier axe, qui fait face à la collerette 11. Dans ce mode de réalisation, cette structure fixe 30 est sous la forme d'un anneau fixe, entourant la connexion entre les deux arbres 10, 20, et correspondant sensiblement au diamètre de la collerette 11, et comprenant des rampes 31 qui s'étendent le long de la circonférence de l'anneau fixe 30 et qui sont ascendantes en direction de la collerette 11. Cet anneau fixe 30 peut faire partie du carter du générateur, une paroi du turboréacteur, ou même une structure indépendante fixe.

Deux rampes circonférentielles 31 sont prévues sur l'anneau fixe 30 faisant face généralement à la collerette 11, les rampes 31 étant situées aux côtés diamétralement opposés et chacune s'étendant selon une moitié de la circonférence de l'anneau fixe 30. Depuis le bas jusque vers le haut, les rampes 31 ont une pente sensiblement uniforme. La hauteur des rampes 31 est essentiellement supérieure à la distance d'engagement des dents 13, 23 par crabotage sur les arbres 10, 20, pour permettre la désolidarisation des arbres.

Entre la collerette 11 et l'anneau fixe 30, un anneau de roulement 40 est prévu. Il s'étend aussi autour du premier axe, entourant essentiellement la connexion entre les deux arbres 10, 20, et est mobile en rotation et en translation également. Il comprend deux tiges radiales 41, avec un rouleau 42 monté sur chaque tige 41. Dans ce cas, les tiges 41 font saillies vers l'extérieur de l'anneau de roulement 40. Elles sont situées aux côtés diamétralement opposés de l'anneau de roulement 40. Les tiges 41, et donc les axes de roulement des rouleaux 42, sont effectivement perpendiculaires au premier axe.

Les rouleaux 42 sont positionnés entre les rampes 31 et la collerette 11 (dans la direction axiale). La rotation relative entre l'anneau de roulement 40 et l'anneau fixe 30 a pour conséquence de faire monter les rouleaux 42 sur les rampes 31, et fait écarter les deux anneaux 30, 40. De préférence, un moyen de sollicitation 61 pour solliciter l'anneau de roulement 40 en contact avec la collerette 11 et l'anneau fixe 30 peut être prévu. Cela peut être réalisé par l'intermédiaire d'un ressort ou d'un actionneur. Cependant, il est souhaitable que ce moyen de sollicitation 61 soit restreint ou inactif, juste pour être relâché ou activé lorsque nécessaire pour solliciter l'anneau de roulement 40 vers la collerette 11. Par exemple, un ressort comprimé peut être relâché, ou un actionneur peut être activé pour solliciter l'anneau de roulement 40 et mettre les rouleaux 42 en contact avec la collerette 11.

L'opération du système de protection de générateur comprenant un système 100 de désolidarisation d'arbres va maintenant être décrit en faisant référence aux figures 1A à 1C, pour aider à la compréhension de l'invention.

Pendant la transmission de rotation lors du fonctionnement normal du turboréacteur et du générateur, les deux arbres 10, 20 sont raccordés (axialement) en engrenage, comme représenté sur la figure 1A, et en rotation à une grande vitesse.

Le ressort (non illustré) sur l'arbre du générateur 10 (premier arbre) sollicite axialement l'arbre du générateur 10 en raccordement avec l'arbre du turboréacteur 20 (deuxième arbre). L'anneau de roulement 40 reste généralement sur l'anneau fixe 30, avec chacun de ses rouleaux 42 tenu sur la rampe 31 vers le bas sans toucher la collerette 10 du premier arbre 10. Un système de surveillance surveille le fonctionnement du générateur.

Lorsqu'un défaut est détecté au niveau du générateur, ou de sa boîte de vitesse, par le système de surveillance du générateur, le système 100 de désolidarisation est déclenché. L'anneau de roulement 40 est, en conséquence, poussé en rotation entre la collerette 11 et l'anneau fixe 30 pour que ces rouleaux 42 montent sur les rampes 31 et viennent au contact de la collerette 11. De préférence, le moyen de sollicitation 61 est un ressort comprimé qui est relâché pour solliciter l'anneau de roulement 40 en rotation. Au lieu d'un ressort, un actionneur ou un électroaimant peuvent également être employés pour mettre l'anneau de roulement 40 en contact avec la collerette 11.

A ce stade, les rouleaux 42 touchent la collerette 11 et commencent à tourner autour de leur axe de roulement grâce à la rotation impartie par la collerette 11 de l'arbre de générateur. La rotation relative entre la collerette 11 et l'anneau fixe 30 a pour effet de faire rouler les rouleaux 42 le long des rampes circonférentielles 31, pour les gravir, dans la direction de la rotation de la collerette 11 et donc de l'arbre du générateur 10.

La figure 1B montre les rouleaux 42 de l'anneau de roulement 40 au milieu de rampes 31, en train de les monter. Lorsque les rouleaux 42 commencent à monter les rampes 31, ils s'enfoncent entre la collerette 11 et les rampes 31 de l'anneau fixe. L'anneau de roulement 40 subit donc une rotation autour du premier axe, et une translation le long du premier axe quand il est engagé par la collerette 11. En conséquence, l'arbre du générateur 10 s'écarte, contre la sollicitation du ressort, de l'arbre du turboréacteur 20. Cela a pour effet que les dents 13, 23 des arbres du générateur et du turboréacteur qui sont en crabotage commencent à se séparer axialement. A cette étape, la rotation est toujours transmise entre des arbres 10, 20 car les dents 13, 23 sont toujours en engrenage et ne sont pas complètement séparées.

La figure 1C montre une position avec les rouleaux 42 ayant atteint l'extrémité haute des rampes 31. A cette position, l'écart entre la collerette 11 et l'anneau fixe 30 est effectivement au maximum. Il sera apprécié que le déplacement des rouleaux 42 entre leur position sur les rampes 31 où ils sont en contact avec la collerette 11 pour la première fois, et leur position sur le haut des rampes 31, dans la direction axiale, correspondent à une distance qui est supérieure à la distance d'engagement des dents 13, 23, permettant ainsi la désolidarisation des arbres 10, 20. Donc, les dents 13, 23 des arbres 10, 20 sont axialement séparées et la transmission de rotation est coupée, protégeant ainsi le générateur et ses composants associés.

Cette désolidarisation rapide par le système de protection permet donc de protéger le générateur dès qu'un défaut est détecté dans le générateur, et donc d'éviter que le générateur ne soit entraîné lorsque le défaut existe, et que le défaut s'amplifie et détruit possiblement le générateur. En outre, ce système 100 de désolidarisation d'arbres est conçu de manière à ce qu'il ne nécessite pas une force importante pour initier la désolidarisation, et la désolidarisation des arbres 10, 20 est faite en utilisant principalement l'énergie de rotation des arbres 10, 20. En outre, avec deux rouleaux 42 de l'anneau de roulement 40 poussant sur la collerette 10 aux côtés diamétralement opposés, une force symétrique agit sur l'arbre du générateur 10 qui est beaucoup mieux qu'une force asymétrique.

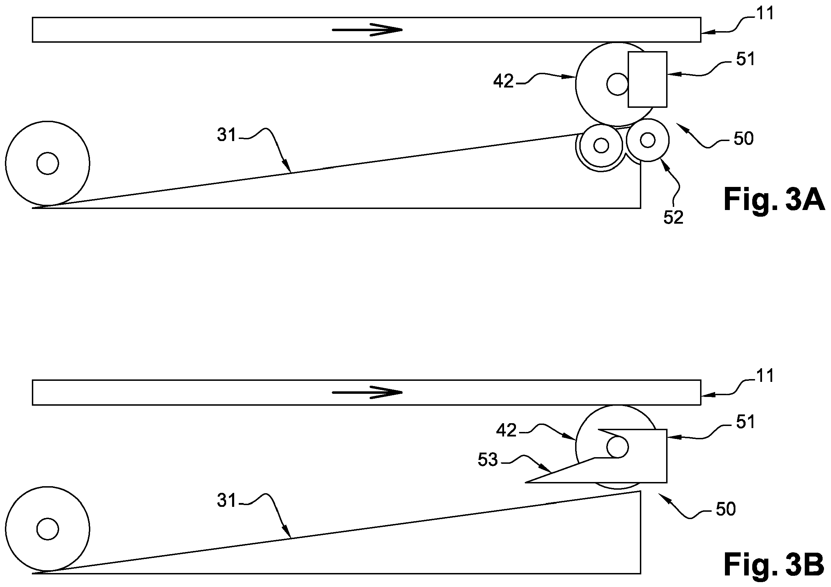

Un organe d'emprisonnement 50 pour maintenir la position de l'anneau de roulement 40 une fois que les rouleaux 42 sont au niveau du haut des rampes 31 est idéalement prévu, pour que les arbres 10, 20 restent désolidarisés. Les figures 3A et 3B montrent, de manière schématique, un rouleau 42 à sa position en bas de la rampe 31, et le même rouleau 42 monté et en haut de la rampe 31. Cet organe d'emprisonnement 50 est prévu, pour arrêter la rotation de l'anneau de roulement 40, avec une butée 51 pour que le rouleau 42 (ou l'anneau de roulement 40) ne dépasse pas une position certaine ni ne tombe sur la rampe 31 suivante. Bien entendu, cet organe d'emprisonnement 50 peut faire partie de la structure fixe 30.

En outre, cet organe d'emprisonnement 50 peut être adapté pour permettre aux rouleaux 42 de continuer à tourner une fois la position haute atteinte, par exemple, en soulevant les rouleaux 42 pour qu'ils ne touchent plus les rampes 31. Sur la figure 3A, cet organe d'emprisonnement est prévu avec deux petits galets 52, espacés l'un de l'autre le long de la rampe 31 et vers le haut de la rampe 31, sur et entre lesquels le rouleau 42 de l'anneau de roulement 40 peut se poser. Cela permet la rotation de la collerette 11 de l'arbre de générateur 10 au cours de l'arrêt en rotation dû à son inertie, mais sans les rouleaux 42 frottant sur la rampe 31, pour éviter leur usure rapide. Sur la figure 3B, une pièce inclinée 53 pour soulever la tige 41 de l'anneau de roulement 40 est prévue, qui soulève donc le rouleau 42 de la rampe 31 et permet sa rotation tant que l'arbre du générateur 10 est toujours en cours d'arrêt de rotation.

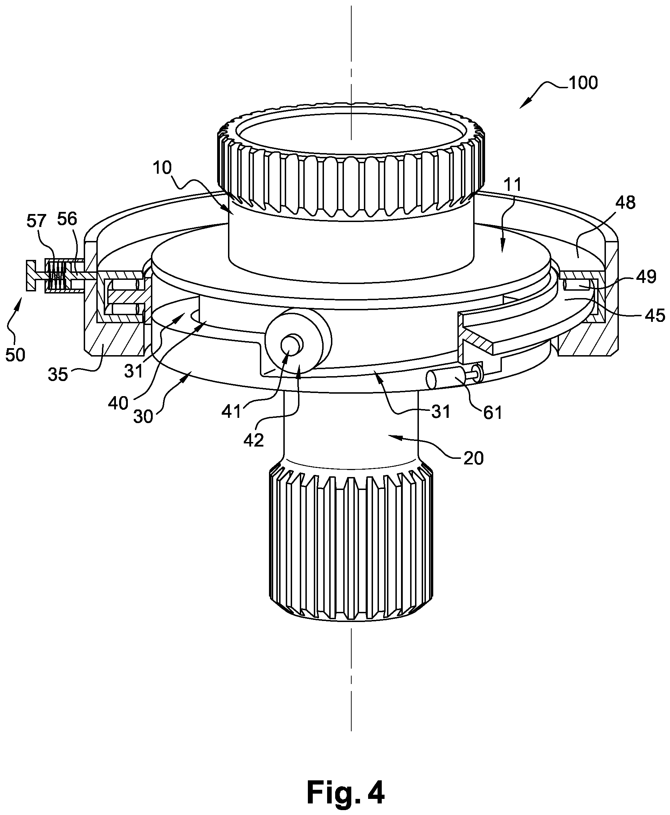

Dans une variante représentée sur la figure 4, l'anneau de roulement 40 est maintenu mobile en rotation au niveau du haut des rampes 31. L'anneau de roulement 40 comprend un anneau extérieur 45 raccordé aux tiges 41 des rouleaux 42 et qui est supporté mobile en rotation par un support de roulement 48 avec les roulements 49, permettant ainsi la rotation libre de l'anneau de roulement 40. Pour des raisons de clarté et de visibilité, l'anneau extérieur 45 et le support de roulement 48 ne sont pas représentées de manière complète.

Le support de roulement 48 est monté mobile en translation, mais pas en rotation, dans un cadre annulaire 35, qui peut faire partie du carter du générateur, ou une structure fixe. Quand l'anneau de roulement 40 tourne et monte les rampes, le support de roulement 48 se déplace en translation dans la même direction guidé par le cadre annulaire 35. Une fois que l'anneau de roulement 40 est sur le haut des rampes et que les arbres sont séparés, un organe d'emprisonnement 50 se déclenche et empêche qu'il ne redescende. L'organe d'emprisonnement 50 dans cette variante est une goupille 56 sollicitée par un ressort 57, déplaçable pour engager le dessous du support de roulement 48.

De cette manière, l'anneau de roulement 40 peut continuer à tourner avec l'arbre du générateur 10 en cours d'arrêt de rotation. Cela évite son arrêt soudain, et donc cette variante est plus adaptée à la rotation des arbres aux très grandes vitesses.

Une fois désolidarisée et l'arbre du générateur 10 arrêté, le générateur peut être réparé pour corriger le défaut. Les deux arbres 10, 20 peuvent ensuite être raccordés de nouveau, en tirant en rotation l'anneau de roulement 40 dans la direction opposée pour que chacun de ses rouleaux 42 descende vers le bas de la rampe 31, ou pour la variante, en relâchant la goupille 56 pour permettre à l'anneau de roulement 40 de redescendre, et en permettant au ressort sollicitant de déplacer l'arbre du générateur 10 axialement vers l'arbre du turboréacteur 20. De préférence, une intervention manuelle est nécessaire pour raccorder les deux arbres 10, 20 et refaire la connexion entre le générateur et le turboréacteur. Avantageusement, les arbres 10, 20 peuvent être raccordés sans dépose du générateur.

Bien sûr, au lieu de deux rouleaux 42 et rampes 31 comme décrit dans le mode de réalisation ci-dessus, le système 100 de désolidarisation peut comprendre encore plus de rouleaux et de rampes, par exemple trois rouleaux et rampes. Cependant, pour une circonférence et une séparation axiale données, plus de rampes implique que la distance de roulement sera réduite tandis que l'inclinaison de la rampe serait plus raide, ce qui peut avoir pour effet que les rouleaux coulissent par rapport à la collerette et la rampe, et restent en bas de la rampe au lieu de rouler sur la rampe et de s'enfoncer entre les deux.

Il sera également évident que ce système 100 de désolidarisation d'arbres n'est pas spécifique aux connexions entre des générateurs et des turboréacteurs. Il sera évident que d'autres applications pour ce système 100 de désolidarisation d'arbres peuvent être envisagées. En outre, il n'est pas nécessaire que le deuxième arbre 20 soit sur le premier axe. Il peut former un angle par rapport au premier axe (et premier arbre 10).

## Revendications

1. Système (100) de désolidarisation en rotation d'arbres comprenant :
- un premier arbre (10),
- un deuxième arbre (20),
le premier arbre (10) s'étendant le long d'un premier axe et étant monté en rotation autour de cet axe, le premier arbre (10) étant apte à coulisser axialement le long du premier axe depuis une position de raccordement en transmission de rotation avec le deuxième arbre (20) vers une position de désolidarisation du deuxième arbre (20), et inversement,
**caractérisé en ce que** le système (100) comprend en outre :
- une collerette (11) située sur le premier arbre (10),
- une structure fixe (30) située sensiblement autour du premier axe et faisant face à la collerette (11), la structure fixe (30) comprenant des rampes 31 ascendantes dans la direction axiale vers la collerette (11),
- un anneau de roulement (40) situé autour du premier axe et axialement entre la collerette (11) et la structure fixe (30), l'anneau de roulement étant mobile en rotation et comprenant des rouleaux (42), les rouleaux étant interposés entre les rampes (31) et la collerette (11),
l'anneau de roulement (40) étant configuré pour être mis en rotation de sorte que les rouleaux (42) se déplacent, entre la collerette (11) et les rampes (31), selon la direction de rotation de la collerette (11) sur les rampes (31) et de sorte à écarter axialement la collerette (11) et la structure fixe (30), de manière à ce que le premier arbre (10) coulisse d'une position de raccordement avec le deuxième arbre (20) à une position de désolidarisation.

2. Système selon la revendication 1, **caractérisé en ce que** la collerette (11) s'étend radialement depuis le premier arbre par rapport au premier axe, et les axes de roulement de rouleaux (42) sont sensiblement perpendiculaires au premier axe.

3. Système selon la revendication 1 ou 2, **caractérisé en ce que** la structure fixe (30) est un anneau fixe avec deux rampes circonférentielles (31) situées sur ses côtés diamétralement opposés, et l'anneau de roulement (40) comprend deux rouleaux (42) situés sur ses côtés diamétralement opposés.

4. Système selon l'une quelconque des revendications précédentes, **caractérisé en ce qu'**il comporte un moyen de sollicitation (61) pour solliciter l'anneau de roulement (40) en rotation.

5. Système selon la revendication 4, **caractérisé en ce que** le moyen de sollicitation (61) est un ressort ou un actionneur.

6. Système selon l'une quelconque des revendications précédentes, **caractérisé en ce qu'**il comporte un organe d'emprisonnement (50) pour maintenir la position de l'anneau de roulement (40) lorsque ces rouleaux (42) sont montés en haut des rampes.

7. Système selon la revendication 6, **caractérisé en ce que** l'organe d'emprisonnement (50) comprend une butée (51).

8. Système selon la revendication 6, **caractérisé en ce que** l'organe d'emprisonnement (50) comprend des petits galets (52) ou une pièce inclinée (53).

9. Système selon la revendication 6, **caractérisé en ce que** l'anneau de roulement (40) est monté mobile en rotation dans un support de roulement (48), et **en ce que** l'organe d'emprisonnement (50) comprend une goupille (56) qui est sollicitée par un ressort (57).

10. Système selon l'une quelconque des revendications précédentes, **caractérisé en ce que** le premier arbre (10) est un arbre entraîné et le deuxième arbre (20) est un arbre d'entraînement.

11. Système de protection de générateur sur une connexion entre un turboréacteur et un générateur, comprenant :
- un système de surveillance,
- un système (100) de désolidarisation en rotation d'arbres selon l'une quelconque des revendications précédentes,
dans lequel le premier arbre (10) est un arbre d'un générateur et le deuxième arbre (20) est un arbre lié à un turboréacteur.

## Patentansprüche

1. System (100) zur Drehentkopplung von Wellen, mit:
- einer ersten Welle (10),
- einer zweiten Welle (20),
wobei sich die erste Welle (10) entlang einer ersten Achse erstreckt und in Drehung um diese Achse angebracht ist, wobei die erste Welle (10) dazu geeignet ist, sich axial entlang der ersten Achse von einer Verbindungsposition in Drehübertragung mit der zweiten Welle (20) zu einer Entkopplungsposition der zweiten Welle (20) und umgekehrt zu verschieben,
**dadurch gekennzeichnet, dass** das System (100) weiterhin Folgendes umfasst:
- einen auf der ersten Welle (10) gelegenen Flansch (11),
- einen festen Aufbau (30), der sich im Wesentlichen um die erste Achse herum befindet und dem Flansch (11) gegenüberliegt, wobei der feste Aufbau (30) in der Achsrichtung zu dem Flansch (11) aufsteigende Rampen (31) aufweist,
- einen Laufring (40), der sich um die erste Achse herum und axial zwischen dem Flansch (11) und dem festen Aufbau (30) befindet, wobei der Laufring drehbeweglich ist und Rollen (42) aufweist, wobei die Rollen zwischen den Rampen (31) und dem Flansch (11) angeordnet sind,
wobei der Laufring (40) dazu ausgeführt ist, derart in Drehung versetzt zu werden, dass sich die Rollen (42) zwischen dem Flansch (11) und den Rampen (31) in der Drehrichtung des Flansches (11) auf die Rampen (31) bewegen, und um den Flansch (11) und den festen Aufbau (30) axial zu verschieben, so dass sich die erste Welle (10) von einer Verbindungsposition mit der zweiten Welle (20) in eine Entkopplungsposition verschiebt.

2. System nach Anspruch 1, **dadurch gekennzeichnet, dass** der Flansch (11) radial von der ersten Welle bezüglich der ersten Achse verläuft und die Laufachsen der Rollen (42) im Wesentlichen senkrecht zur ersten Achse stehen.

3. System nach Anspruch 1 oder 2, **dadurch gekennzeichnet, dass** der feste Aufbau (30) ein fester Ring mit zwei Umfangsrampen (31) ist, die sich auf seinen diametral gegenüberliegenden Seiten befinden, und der Laufring (40) zwei Rollen (42) aufweist, die sich auf seinen diametral gegenüberliegenden Seiten befinden.

4. System nach einem der vorhergehenden Ansprüche, **dadurch gekennzeichnet, dass** es eine Belastungseinrichtung (61) enthält, um den Laufring (40) in Drehung zu belasten.

5. System nach Anspruch 4, **dadurch gekennzeichnet, dass** die Belastungseinrichtung (61) eine Feder oder ein Wirkglied ist.

6. System nach einem der vorhergehenden Ansprüche, **dadurch gekennzeichnet, dass** es eine Käfigeinheit (50) aufweist, um die Position des Laufrings (40) beizubehalten, wenn diese Rollen (42) oben auf den Rampen angebracht werden.

7. System nach Anspruch 6, **dadurch gekennzeichnet, dass** die Käfigeinheit (50) einen Anschlag (51) umfasst.

8. System nach Anspruch 6, **dadurch gekennzeichnet, dass** die Käfigeinheit (50) kleine Rollen (52) oder ein geneigtes Teil (53) umfasst.

9. System nach Anspruch 6, **dadurch gekennzeichnet, dass** der Laufring (40) beweglich in Drehung in einer Laufhalterung (48) angebracht ist und dass die Käfigeinheit (50) einen Stift (56) aufweist, der durch eine Feder (57) belastet wird.

10. System nach einem der vorhergehenden Ansprüche, **dadurch gekennzeichnet, dass** die erste Welle (10) eine angetriebene Welle ist und die zweite Welle (20) eine Antriebswelle ist.

11. System zum Schutz eines Generators bei einer Verbindung zwischen einem Turboreaktor und einem Generator, mit:
- einem Überwachungssystem,
- einem System (100) zur Drehentkopplung von Wellen nach einem der vorhergehenden Ansprüche,
in welchem die erste Welle (10) eine Welle eines Generators darstellt und die zweite Welle (20) eine mit einem Turboreaktor verbundene Welle darstellt.

## Claims

1. System (100) for rotational decoupling of shafts, comprising:
- a first shaft (10),
- a second shaft (20),
the first shaft (10) extending along a first axis and being mounted rotatably about this axis, the first shaft (10) being capable of axially sliding along the first axis from a position of connection with transmission of rotation to the second shaft (20) to a position of decoupling from the second shaft (20), and vice versa,
**characterised in that** the system (100) further comprises:
- a flange (11) located on the first shaft (10),
- a fixed structure (30) located substantially around the first axis and facing the flange (11), the fixed structure (30) comprising ramps (31) ascending in the axial direction towards the flange (11),
- a roller ring (40) located around the first axis and axially between the flange (11) and the fixed structure (30), the roller ring being movable in rotation and comprising rollers (42), the rollers being interposed between the ramps (31) and the flange (11),
the roller ring (40) being configured to be rotated in such a way that the rollers (42) move, between the flange (11) and the ramps (31), in the direction of rotation of the flange (11) on the ramps (31) and in such a way as to axially move apart the flange (11) and the fixed structure (30), such that the first shaft (10) slides from a position of connection to the second shaft (20) to a decoupling position.

2. System according to claim 1, **characterised in that** the flange (11) extends radially from the first shaft with respect to the first axis, and the axes of rolling of rollers (42) are substantially perpendicular to the first axis.

3. System according to claim 1 or 2, **characterised in that** the fixed structure (30) is a fixed ring with two circumferential ramps (31) located on its diametrically opposed sides, and the roller ring (40) comprises two rollers (42) located on its diametrically opposed sides.

4. System according to any one of the previous claims, **characterised in that** it comprises a biasing means (61) for biasing the roller ring (40) into rotation.

5. System according to claim 4, **characterised in that** the biasing means (61) is a spring or an actuator.

6. System according to any one of the previous claims, **characterised in that** it comprises a trapping member (50) for maintaining the position of the roller ring (40) when these rollers (42) have moved to the top of the ramps.

7. System according to claim 6, **characterised in that** the trapping member (50) comprises a stop (51).

8. System according to claim 6, **characterised in that** the trapping member (50) comprises small wheels (52) or an inclined part (53).

9. System according to claim 6, **characterised in that** the roller ring (40) is rotatably mounted in a roller support (48), and **in that** the trapping member (50) comprises a pin (56) which is biased by a spring (57).

10. System according to any one of the previous claims, **characterised in that** the first shaft (10) is a driven shaft and the second shaft (20) is a drive shaft.

11. System for protection of a generator on a connection between a gas turbine engine and a generator, comprising:
- a monitoring system,
- a system (100) for rotational decoupling of shafts according to any one of the previous claims,
wherein the first shaft (10) is a shaft of a generator and the second shaft (20) is a shaft linked to a gas turbine engine.
